# EUROPÄISCHE PATENTANMELDUNG

(11) **EP 1 167 753 A2**
(43) Veröffentlichungstag der Anmeldung: **02.01.2002**
(21) Anmeldenummer: 01107559.5
(22) Anmeldetag: 27.03.2001
(51) Int. Cl.: F02P 5/15

(54) **Verfahren und Einrichtung zur Steuerung einer Benzin-Brennkraftmaschine mit Direkteinspritzung**

(30) Priorität: 28.06.2000 DE 10031554
(71) Anmelder: ROBERT BOSCH GMBH, 70442 Stuttgart (DE)
(72) Erfinder: Hartmann, Dirk, 70469 Stuttgart (DE); Konrad, Joachim, 71732 Tamm (DE); Pantring, Juergen, 71701 Schwieberdingen (DE); Hess, Werner, 70499 Stuttgart (DE)

(57) **Zusammenfassung**

Bei einem Verfahren zur Steuerung einer Benzin-Brennkraftmaschine mit Direkteinspritzung wird für jeden Zylinder (Z1, Z2, Z3, Z4) bei jedem Einspritzvorgang ein Wert in eine Speicherzelle (M1, M2, M3, M4) einer Speichereinrichtung (20) geschrieben, welcher für die jeweilige eingespritzte Kraftstoffmenge den Zündzeitpunkt für diesen Zylinder bestimmt, und der dann wieder ausgelesen wird, wenn der jeweilige Zylinder gezündet werden soll. Das erfindungsgemäße Verfahren hat den Vorteil, daß jeder Zylinder genau mit der Zündwinkelverschiebung gezündet werden kann, die der vorher in denselben Zylinder eingespritzten Kraftstoffmenge und damit genau dem in diesem Zylinder zum Zündzeitpunkt herrschenden Mischungsverhältnis entspricht. Also kann auch bei schnellen Veränderungen der Kraftstoff-Einspritzmenge jeder Zylinder zum optimalen Zeitpunkt gezündet werden.

## Beschreibung

### Stand der Technik

Die Erfindung betrifft ein Verfahren zur Steuerung einer Benzin-Brennkraftmaschine mit Direkteinspritzung sowie eine Steuereinrichtung für eine Benzin-Brennkraftmaschine mit Direkteinspritzung.

Um bei derartigen Brennkraftmaschinen, etwa Ottomotoren, eine optimale Verbrennung zu erreichen, muß der Zündzeitpunkt an das Mischungsverhältnis des Kraftstoff-Luft-Gemisches im Brennraum angepaßt werden. Dies geschieht üblicherweise dadurch, daß der Zündwinkel, der den Motorparametern wie Drehzahl, Betriebstemperatur und Lastbereich zugeordnet ist, mit einer Zündwinkelverschiebung versehen wird, die von dem Mischungsverhältnis, ausgedrückt in der Luftzahl λ, abhängt. Die Luftzahl λ stellt sich abhängig von der eingespritzten Kraftstoffmenge ein, so daß diese nach dem Einspritzvorgang bekannt ist und damit auch die erforderliche Zündwinkelverschiebung bestimmt werden kann. Unter der Annahme, daß die Randbedingungen zwischen dem Einspritzen des Kraftstoffs und dem Zünden gleich bleiben, kann die Motorsteuerung das Gemisch theoretisch zum optimalen Zündzeitpunkt zünden.

Da die Einspritzung allerdings bereits in der Ansaugphase erfolgt, also etwa 270° vor dem oberen Totpunkt des jeweiligen Zylinders, liegt bei den in der Praxis üblichen Mehrzylindermotoren zeitlich zwischen dem Einspritzvorgang für einen bestimmten Zylinder und der Zündung desselben Zylinders der Zündvorgang für einen oder mehrere andere Zylinder. Wenn nun aber, wie bisher üblich, beim Einspritzvorgang über die eingespritzte Kraftstoffmenge und die sich damit einstellende Luftzahl λ die Zündwinkelverschiebung bestimmt wird, hat dies zur Folge, daß ein aktuell zu zündender Zylinder mit der Zündwinkelverschiebung gezündet wird, die aufgrund eines Einspritzvorgangs für einen anderen Zylinder festgelegt wurde. Es können jedoch so schnelle Veränderungen in der einzuspritzenden Kraftstoffmenge und damit auch in der Luftzahl λ erforderlich werden, daß die sich einstellende Differenz zwischen der Zündwinkelverschiebung, die für einen Zylinder aufgrund der tatsächlichen Einspritzmenge notwendig wäre, und der tatsächlich angewandten Zündwinkelverschiebung nicht mehr vernachlässigbar ist. Dies ist insbesondere bei elektronisch geregelten Motoren der Fall. Dort muß die Stellgröße, also die einzuspritzende Kraftstoffmenge, schnell genug nachgeführt werden können, um Regelschwingungen zu vermeiden.

Die Aufgabe der Erfindung besteht darin, ein Verfahren zur Steuerung einer Benzin-Brennkraftmaschine mit Direkteinspritzung zu schaffen, bei dem jeder Zylinder zum optimalen Zeitpunkt gezündet wird.

### Vorteile der Erfindung

Das erfindungsgemäße Verfahren mit den Merkmalen des Patentanspruchs 1 hat den Vorteil, daß jeder Zylinder genau mit der Zündwinkelverschiebung gezündet werden kann, die der vorher in denselben Zylinder eingespritzten Kraftstoffmenge und damit genau dem in diesem Zylinder zum Zündzeitpunkt herrschenden Mischungsverhältnis entspricht. Diese individuelle Zündwinkelverschiebung ist unabhängig von Zündwinkelverschiebungen, die zwischen dem Einspritzvorgang für den betrachteten Zylinder und dem Zünden dieses Zylinders aufgrund von Einspritzvorgängen für andere Zylinder errechnet werden.

Gemäß einer bevorzugten Ausführungsform der Erfindung ist vorgesehen, daß der gespeicherte Wert die Verschiebung des Zündwinkels in Abhängigkeit vom normierten Luftverhältnis darstellt. Der gespeicherte Wert kann daher direkt von der Steuerung der Zündeinrichtung ausgelesen und zusammen mit dem durch die Motorparameter festgelegten Zündwinkel für die Zündung des Zylinders verwendet werden.

Die erfindungsgemäße Vorrichtung mit den Merkmalen des Sachanspruchs bietet im wesentlichen dieselben Vorteile wie hinsichtlich des Verfahrens gemäß Anspruch 1 erläutert.

Gemäß einer bevorzugten Ausführungsform der Steuerung ist vorgesehen, daß die Speichereinrichtung so viele Speicherzellen aufweist, wie Zylinder vorhanden sind. Damit kann für jeden Zylinder der beim Einspritzvorgang festgelegte Wert, der den Zündzeitpunkt bestimmt, in einer bestimmten, dem jeweiligen Zylinder zugeordneten Speicherzelle abgelegt werden, wobei der Wert zyklisch überschrieben werden kann, so daß immer nur der aktuelle Wert gespeichert ist.

Weitere Ausgestaltungen und Vorteile der Erfindung ergeben sich aus den Unteransprüchen.

### Zeichnungen

Die Erfindung wird nachfolgend unter Bezugnahme auf ein Ausführungsbeispiel beschrieben, das in den beigefügten Zeichnungen dargestellt ist. In diesen zeigen:
- Fig. 1 eine schematische Darstellung einer erfindungsgemäßen Steuereinrichtung; und
- Fig. 2 eine schematische Darstellung der Abfolge von Einspritz- und Zündungsvorgängen für die Steuereinrichtung von Fig. 1.

### Beschreibung des Ausführungsbeispieles

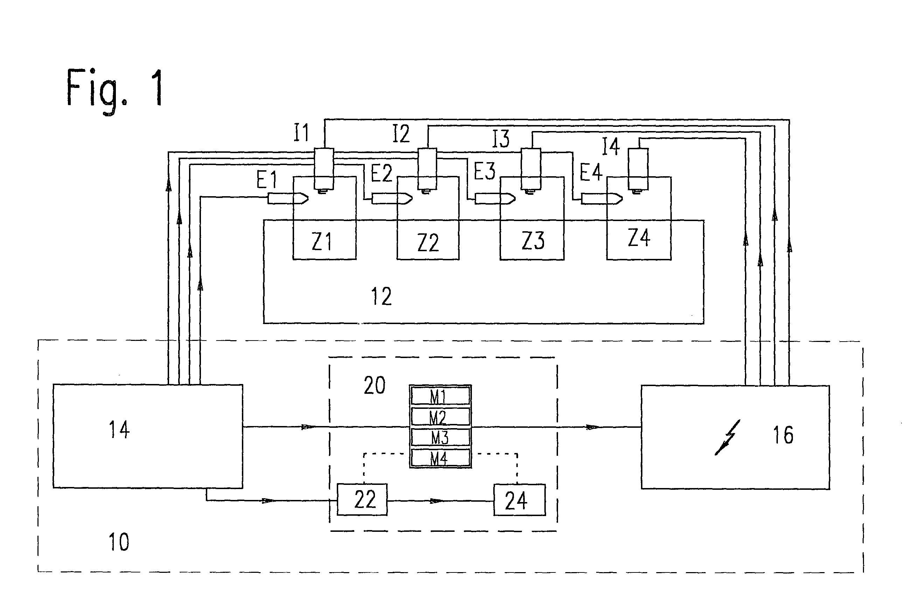

In Fig. 1 ist schematisch eine Steuereinrichtung 10 dargestellt, die hier beispielhaft für einen Vierzylindermotor 12 verwendet wird. Der Motor 12 weist vier Zylinder Z1 bis Z4 auf, die jeweils mit einer Einspritzdüse E1 bis E4 und einer Zündkerze I1 bis I4 ausgestattet sind. Grundsätzlich kann die Steuereinrichtung aber für jeden Mehrzylindermotor verwendet werden.

Die Steuereinrichtung 10 weist eine Einspritzeinrichtung 14 und eine Zündeinrichtung 16 auf. Mittels der Einspritzeinrichtung 14 können die Einspritzdüsen E1 bis E4 separat angesteuert werden, um in die Zylinder Z1 bis Z4 eine bestimmte Kraftstoffmenge einzuspritzen. Die Zündeinrichtung 16 dient dazu, mittels einer der Zündkerzen I1 bis I4 zu einem festgelegten Zeitpunkt das in dem jeweiligen Zylinder verdichtete Gemisch zu zünden. Die Steuereinrichtung 10 weist weiterhin eine Speichereinrichtung 20 mit vier Speicherzellen M1 bis M4 und zwei Zylinderzählern 22, 24 auf. Die Einspritzeinrichtung 14 liefert einen Wert für die Verschiebung des Zündzeitpunkts, der in die Speicherzelle geschrieben werden kann, die der Zylinderzähler 22 gerade anzeigt. Aus der Speichereinheit 14 wird immer ein Wert aus der Speicherzelle, die durch den Zylinderzähler 24 bestimmt ist, ausgelesen und an die Zündeinrichtung 16 weitergegeben.

Im folgenden wird die Funktion der Steuereinrichtung 10 für die Betriebsart homogen mager eines Vierzylindermotors 12 mit der hypothetischen Zündreihenfolge 1-2-3-4 beschrieben. Diese unrealistische Zündfolge wurde lediglich beispielhaft ausgewählt, um die Beschreibung einfacher zu halten. Selbstverständlich läßt sich die Erfindung auf beliebige Zündfolgen anwenden; es ist lediglich die Zuordnung zu den Zylindern anzupassen.

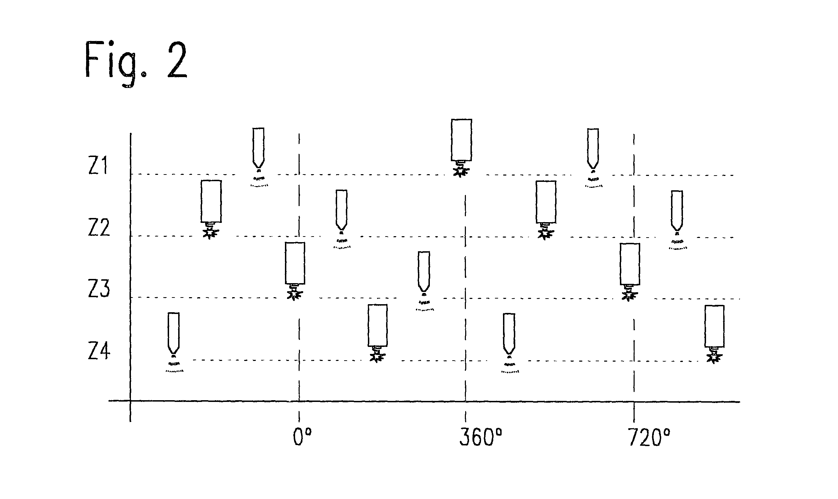

Der Ablauf von Einspritz- und Zündzeitpunkten ist schematisch in dem Diagramm in Fig. 2 in Abhängigkeit vom Kurbelwellenumlauf wiedergegeben. Es ist zu sehen, daß zwischen dem Einspritzvorgang und dem Zündvorgang eines Zylinders, z.B. bei Zylinder 1, die Zündvorgänge an Zylinder 3 und 4 liegen.

Zylinder 1 befinde sich im Ansaugtakt. Die Einspritzeinrichtung 14 steuert die Einspritzdüse E1 so an, daß entsprechend der vorliegenden Momentanforderung der Motorregelung (nicht dargestellt), welche selbstverständlich in demselben Steuergerät wie die erfindungsgemäße Steuereinrichtung 10 integriert sein kann, eine bestimmte Kraftstoffmenge in den Brennraum des Zylinders 1 eingespritzt wird. Damit bildet sich dort ein Gemisch, das durch die Luftzahl λ₁ beschrieben werden kann, welche das Massenverhältnis von Luft zu Kraftstoff, normiert auf das stöchiometrische Verhältnis der idealen Gemischzusammensetzung, ausdrückt. Um das Gemisch mit der Luftzahl λ₁ optimal zu verbrennen, muß der Zündzeitpunkt, der durch den Zündwinkel ausgedrückt ist, angepaßt werden. Diese Zündwinkelverschiebung wird im dargestellten Beispiel von der Einspritzeinrichtung 14 berechnet oder anhand von Tabellen ermittelt und an die Zündeinrichtung 16 weitergegeben. Die Zündwinkelverschiebung kann allerdings genausogut von der Zündeinrichtung 16 selbst berechnet werden; dann muß der letzteren die Luftzahl λ₁ selbst oder ein anderer, diese charakterisierender Wert übergeben werden.

Der Wert für die Zündwinkelverschiebung wird allerdings erfindungsgemäß nicht direkt an die Zündeinrichtung 16 weitergegeben, sondern zunächst an die Speichereinrichtung 20. Außerdem wird der Zylinderzähler 22 auf die Nummer des aktuell eingespritzten Zylinders, also in diesem Fall 1, gesetzt. Der Zylinderzähler 24 wird ebenfalls aktualisiert, aber gegenüber dem Zähler 22 mit einem Offset, der für einen Vierzylindermotor 2 beträgt. Damit steht der Zähler 24 auf 3, wobei anzumerken ist, daß die Zylinderzähler 22 und 24 Modulo 4 zählen. In der Speichereinrichtung 20 wird der Wert in eine Speicherzelle geschrieben, und zwar in die Speicherzelle, auf die der Zylinderzähler 22 weist, also in M1. Anschließend wird der nächste Zylinder, also Zylinder 2, von der Einspritzeinrichtung 14 mit einer bestimmten Kraftstoffmenge versehen, um dort ein Gemisch mit einer Luftzahl λ₂ herzustellen. Die entsprechende Zündwinkelverschiebung wird berechnet und in der Speicherzelle M2 gespeichert, usw.

Auf der Ausgabeseite der Speichereinrichtung 20 wird aus der Speicherzelle, auf die der Zähler 24 zeigt, der jeweilige Wert für die Zündwinkelverschiebung gelesen und an die Zündeinrichtung 16 weitergegeben, welche mit dieser Zündwinkelverschiebung den im Zylinderzähler 24 indizierten Zylinder zündet. Wie Fig. 2 zeigt, ist nach dem Einspritzen in Zylinder 1 der Zündvorgang von Zylinder 3 an der Reihe. Zu diesem Zeitpunkt steht der Zylinderzähler 22 auf 1, damit der zu λ₁ gehörende Wert für die Zündwinkelverschiebung in der Speicherzelle M1 gespeichert wird. Wegen des oben bereits erwähnten Offset steht der Zylinderzähler 24 auf 3, so daß aus der Speicherzelle M3 der Wert für die Zündwinkelverschiebung ausgelesen werden kann, die zu dem im Zylinder 3 aktuell herrschenden Mischungsverhältnis mit der Luftzahl λ₃ gehört. Dieser Wert wird an die Zündeinrichtung 16 weitergegeben, die damit das im Zylinder 3 komprimierte Gemisch zum optimalen Zeitpunkt zünden kann.

Auf diese Weise wird jeder Wert für die Zündwinkelverschiebung, der zu dem Gemisch mit der Luftzahl λ einer bestimmten Zylinderfüllung gehört, so lange zwischengespeichert, bis er zur Zündung dieser Zylinderfüllung gebraucht wird. Da der Wert nach der Zündung wieder überschrieben werden kann, sind maximal so viele Speicherzellen notwendig, wie Zylinder vorhanden sind, wenn jedem Zylinder genau eine bestimmte Speicherzelle zugeordnet werden soll.

Als Variante wäre es denkbar, die Speichereinrichtung als Schieberegister auszubilden, das mit jedem Einspritz- oder Zündvorgang getaktet ist und den Wert für die Zündwinkelverschiebung, oder einen anderen Wert, welcher für die jeweilige eingespritzte Kraftstoffmenge den Zündzeitpunkt für diesen Zylinder bestimmt, für eine Anzahl von Takten zwischenspeichert, wobei diese Anzahl von Takten der Anzahl von Zündvorgängen entspricht, die zwischen dem Einspritzen eines Zylinders und dem Zünden desselben liegen. Dies sind im Falle eines Vierzylindermotors eben zwei, wie auch in Fig. 2 zu sehen ist.

## Patentansprüche

1. Verfahren zur Steuerung einer Benzin-Brennkraftmaschine mit Direkteinspritzung, **dadurch gekennzeichnet, daß** für jeden Zylinder (Z1, Z2, Z3, Z4) bei jedem Einspritzvorgang ein Wert in eine Speicherzelle (M1, M2, M3, M4) einer Speichereinrichtung (20) geschrieben wird, der für die jeweilige eingespritzte Kraftstoffmenge den Zündzeitpunkt für diesen Zylinder bestimmt, und der dann wieder ausgelesen wird, wenn der jeweilige Zylinder gezündet werden soll.

2. Verfahren nach Anspruch 1, **dadurch gekennzeichnet, daß** der gespeicherte Wert die Verschiebung des Zündwinkels in Abhängigkeit vom normierten Luftverhältnis darstellt.

3. Verfahren nach einem der Ansprüche 1 und 2, **dadurch gekennzeichnet, daß** beim Schreiben des Wertes für einen Zylinder der vorherige Wert für denselben Zylinder überschrieben wird.

4. Steuereinrichtung (10) für eine Benzin-Brennkraftmaschine mit Direkteinspritzung, **dadurch gekennzeichnet, daß** eine Speichereinrichtung (20) vorhanden ist, in welcher für jeden Zylinder (Z1, Z2, Z3, Z4) bei jedem Einspritzvorgang ein Wert gespeichert wird, der den Zündzeitpunkt für diesen Zylinder abhängig von der jeweils eingespritzten Kraftstoffmenge bestimmt.

5. Steuereinrichtung nach Anspruch 4, **dadurch gekennzeichnet, daß** der gespeicherte Wert die Verschiebung des Zündwinkels in Abhängigkeit vom normierten Luftverhältnis darstellt.

6. Steuereinrichtung nach Anspruch 4 oder 5, **dadurch gekennzeichnet, daß** die Speichereinrichtung so viele Speicherzellen aufweist, wie Zylinder (Z1, Z2, Z3, Z4) vorhanden sind.
